# EUROPEAN PATENT SPECIFICATION

(11) **EP 2 322 579 B1**
(45) Date of publication and mention of the grant of the patent: **20.02.2013**
(21) Application number: 08878590.2
(22) Date of filing: 12.12.2008
(51) Int. Cl.: C09B 67/00, A23L 1/27, A61J 1/00, B65D 65/20, B65D 65/40, B65D 81/30, C09B 61/00

(54) **METHOD OF PREVENTING DISCOLORATION OF CAROTENOID PIGMENT AND CONTAINER USED THEREFOR**
VERFAHREN UND BEHÄLTER ZUR VERHINDERUNG DES VERBLASSENS VON CAROTINOIDFARBSTOFF
PROCEDE ET RECIPIENT POUR EMPECHER LA DECOLORATION D'UN COLORANT CAROTENOIDE

(30) Priority: 04.12.2008 JP 2008309351
(43) Date of publication of application: 18.05.2011
(73) Proprietor: FUJI CHEMICAL INDUSTRY CO., LTD., Nakaniikawa-gun, Toyama 930-0397 (JP)
(72) Inventor: TOMINAGA, Kumi, Nakaniikawa-gun Toyama 930-0397 (JP); KARATO, Mariko, Nakaniikawa-gun Toyama 930-0397 (JP); HONGO, Nobuko, Nakaniikawa-gun Toyama 930-0397 (JP); YAMASHITA, Eiji, Nakaniikawa-gun Toyama 930-0397 (JP)
(74) Representative: Wunderlich, Rainer
(86) International application number: PCT/JP2008/072646
(87) International publication number: WO 2010/064332

(56) References cited:
- WO-A2-01/58996
- JP-A- 2002 065 154
- JP-A- 2005 002 175
- JP-A- 2006 273 391
- JP-A- 2007 135 509

## Description

### TECHNICAL FIELD

The present invention relates to a method of suppressing discoloration of a carotenoid pigment due to light, a container that utilizes the method, and a method of storing food, drink, functional food, an external preparation, cosmetics, a quasi drug, a drug, and the like using the container.

### BACKGROUND ART

A carotenoid pigment is a yellow to red pigment that is widely found in animals and plants, and contained in various food products (e.g., carrot, tomato, citrus fruits, salmon, prawn, crab, and egg).

Since a carotenoid pigment that is extracted from various animals and plants or is chemically synthesized is safe, a carotenoid pigment is widely used in various types of food (health food), cosmetics, drugs, and the like as a coloring agent in the form of a viscous liquid, paste, or powder.

However, since a carotenoid pigment has a long conjugated system in the molecule, a carotenoid pigment has poor stability against oxygen, heat, and the like (particularly against light).

Therefore, a coloring agent that contains a carotenoid pigment is easily discolored with time due to light.

When the coloring agent has been discolored, the commercial value of food (health food), cosmetics, drugs, and the like deteriorates to a large extent.

A carotenoid has a maximum absorption wavelength at 250 to 300 nm (ultraviolet region) and 420 to 480 nm (visible region), although the maximum absorption wavelength may vary depending on the solvent and the inclusion state. It is considered that the conjugated double bond is destroyed due to light at such a wavelength so that discoloration occurs (see Non-patent Document 1).

A xanthophyll (i.e., carotenoid) is considered to be stable in an aqueous solvent in a free form as compared with an ester form (see Non-patent Document 2).

In the food/drink field, a container formed of a given material, a UV absorber, and the like have been utilized to reduce the degree of peroxidation and prevent discoloration of an artificial colorant (deterioration due to light) (see Non-patent Document 3).

A method of preventing discoloration of a carotenoid pigment due to light by mixing an additive (e.g., antioxidant) with the carotenoid pigment has been disclosed. For example, a discoloration inhibitor that contains an active ingredient that is extracted from sunflower seeds or a pomace thereof using water or a water-containing alcohol (Patent Document 1), a discoloration inhibitor that contains a soluble eggshell membrane and a water-soluble antioxidant as active ingredients (Patent Document 2), a discoloration inhibitor that contains a phenylpropanoid glycoside as an active ingredient (Patent Document 3), and a method of inhibiting discoloration of a carotenoid by adding an agent that blocks light at a wavelength of 370 to 500 nm (Patent Document 4), have been proposed.

However, when adding a stabilizer in addition to a carotenoid, a change in texture or flavor, an increase in acridity, or the like necessarily occurs when using such a mixture as food, drink, functional food, an external preparation, cosmetics, a quasi drug, a drug, or the like. Therefore, a method that can stabilize a pigment without using an antioxidant or the like has been desired.

A method that suppresses discoloration of a carotenoid pigment by blocking light at a wavelength around the maximum absorption wavelength has been known, as described above and additionnally disclosed by WO 01/58996 A2. However, no report has revealed the effects of light in a wavelength region other than the maximum absorption wavelength region on a carotenoid pigment and a carotenoid pigment-containing composition.
Patent Document 1: JP-A-4-110391
Patent Document 2: JP-A-11-215968
Patent Document 3: JP-A-2002-173608
Patent Document 4: JP-A-2005-002112
Non-patent Document 1: Study on Natural Pigment, Aichi Food Industrial Laboratory Annual Report, 41, 1 (1973)
Non-patent Document 2: Degree Thesis Summary of Okayama University, 2005 (No. 45), No. 2935
Non-patent Document 3: Technology of Preventing Food Deterioration due to Light, Science Forum (2001)

### DISCLOSURE OF THE INVENTION

### PROBLEMS TO BE SOLVED BY THE INVENTION

An object of the invention is to provide a method of suppressing discoloration of a carotenoid pigment due to light without adding a stabilizer or the like that causes a change in texture or flavor or an increase in acridity, a container that utilizes the method, and a method of storing food, drink, functional food, an external preparation, cosmetics, a quasi drug, a drug, and the like using the container.

### MEANS FOR SOLVING THE PROBLEMS

A method of suppressing discoloration of a carotenoid pigment according to the invention controls the average spectral transmittance at a wavelength of 535 to 695 nm.

Discoloration of a carotenoid pigment contained in food, drink, functional food, an external preparation, cosmetics, a quasi drug, a drug, and the like can be prevented by utilizing a container that controls the average spectral transmittance at a wavelength of 535 to 695 nm.

Specifically, the method of suppressing discoloration of a carotenoid pigment according to the invention comprises storing a carotenoid pigment in a container that has an average spectral transmittance of 45.0% or less at a wavelength of 535 to 695 nm.

The container may have a high transmittance at a wavelength within the range of 535 to 695 nm insofar as the average spectral transmittance of incident light at a wavelength of 535 to 695 nm is 45.0% or less.

The average spectral transmittance of the container is set to 0.01 % or more so that the amount of food, drink, functional food, an external preparation, cosmetics, a quasi drug, or a drug stored in the container can be determined from the outside of the container.

Specifically, a container (e.g., metal container) that completely blocks light does not fall under the container according to the invention.

The lower limit of the average spectral transmittance at a wavelength of 535 to 695 nm may be 0.5% or more or 1% or more, so that the amount of product contained in the container can be easily determined from the outside.

In the invention, the upper limit of the average spectral transmittance is set to 45.0% or less because it was confirmed that discoloration of a carotenoid pigment was suppressed to a level equal to or higher than that when adding a stabilizer.

Therefore, the upper limit of the average spectral transmittance may be set to 35.0% or less, and preferably 25.0% or less, depending on the storage condition and the storage period of a carotenoid pigment. When the upper limit of the average spectral transmittance was set to 15% or less, it was confirmed by experiments that the effect of suppressing discoloration of a carotenoid pigment increased by a factor of 1.5 (index) as compared with a comparative product.

It was also confirmed by experiments that the discoloration suppression effect is significantly affected by the average spectral transmittance at a wavelength of 535 to 600 nm. Therefore, the average spectral transmittance at a wavelength of 535 to 600 nm may be controlled to 0.01 to 45.0% depending on the desired color tone of the container.

In this case, the long-term storage capability is increased by setting the upper limit of the average spectral transmittance at a wavelength 535 to 600 nm to 35.0% or less, preferably 25.0% or less, and more preferably 15.0% or less.

A carotenoid pigment is decomposed to only a small extent due to light at a wavelength of 695 nm or more. Therefore, the container may have a high transmittance at a wavelength of 695 nm or more, or may completely block light at a wavelength of 695 nm or more.

### EFFECTS OF THE INVENTION

The invention is based on the finding that it is effective to control the average spectral transmittance at a wavelength of 535 to 695 nm in order to suppress discoloration of a carotenoid pigment.

This completely differs from an approach that controls only a wavelength region around the maximum absorption wavelength of a carotenoid pigment.

According to the invention, since food, drink, functional food, an external preparation, cosmetics, a quasi drug, a drug, and the like containing a carotenoid pigment can be stored without adding a stabilizer that is generally used to suppress discoloration of a carotenoid pigment, a change in texture or flavor or an increase in acridity can be prevented.

### BRIEF DESCRIPTION OF THE DRAWINGS

FIG. 1 shows a spectral transmittance curve of each control filter (control: non-control filter).
FIG. 2 shows a configuration example of a testing instrument.

### EXPLANATION OF SYMBOLS

1 Control filter
2 Non-control filter
3 Light-receiving section
4 Detection section

### BEST MODE FOR CARRYING OUT THE INVENTION

The method according to the invention suppresses discoloration of a carotenoid pigment contained in a container due to light by setting the average spectral transmittance at a wavelength of 535 to 695 nm to 45.0% or less, instead of controlling the transmittance at the decomposition wavelength of a carotenoid pigment.

In the invention, the term "discoloration suppression" includes prevention of discoloration.

The average spectral transmittance at a wavelength of 535 to 695 nm is reduced by placing a carotenoid pigment in a container for which the average spectral transmittance at a wavelength of 535 to 695 nm can be controlled to a given value.

In the invention, the term "container" includes a solid container, a covering, a coating film, and a liquid layer.

The type of container may be appropriately selected depending on the shape of a composition that contains a carotenoid pigment.

The material for the container may be an arbitrary composition that contains a substance that controls the average spectral transmittance at a wavelength of 535 to 695 nm to a value equal to or less than a given value by at least partially reducing the transmittance at a wavelength of 535 to 695 nm.

The composition used as the material for the container may be a material that is normally used for a container. Examples of the composition used as the material for the container include a cellulose (e.g., cellophane), glass, plastic, gelatin, and the like.

The term "carotenoid pigment" used herein includes carotenes and xanthophylls. The carotenoid pigment may be a carotenoid pigment that is extracted and purified from animals and plants, or a carotenoid pigment that is obtained by fermentation or synthesis.

Examples of the carotenes include carotene, lycopene, and the like.

Examples of the xanthophylls include astaxanthin, canthaxanthin, zeaxanthin, capsanthin, lutein, violaxanthin, cryptoxanthin, and the like. Among these, astaxanthin is preferable.

These xanthophylls may be extracted from natural products such as plants, animals, and microorganisms, or may be chemically synthesized.

The raw material, the home, and the method of producing natural products from which xanthophylls are extracted are not particularly limited.

The term "xanthophyll" used herein includes xanthophylls and/or esters thereof, unless otherwise indicated.

The xanthophyll esters may be monoesters and/or diesters.

Examples of the xanthophyll monoesters include esters produced using a lower or higher saturated fatty acid or a lower or higher unsaturated fatty acid.

Specific examples of the lower or higher saturated fatty acid and the lower or higher unsaturated fatty acid include acetic acid, lauric acid, myristic acid, pentadecanoic acid, palmitic acid, palmitoleic acid, heptadecanoic acid, elaidic acid, recinoleic acid, petroselinic acid, vaccenic acid, eleostearic acid, punicic acid, licanic acid, parinaric acid, gadoleic acid, 5-eicosenoic acid, 5-docosene acid, cetoleic acid, erucic acid, 5,13-docosadienoic acid, selacholic acid, decenoic acid, stering acid, dodecenoic acid, oleic acid, stearic acid, eicosapentaenoic acid, docosahexaenoic acid, linoleic acid, linolenic acid, arachidonic acid, and the like.

Examples of the carotenoid diesters include carotenoid diesters produced using identical or different fatty acids selected from above fatty acids.

Examples of the xanthophyll monoesters include xanthophyll monoesters produced using amino acids such as glycine and alanine; monocarboxylic acids or polycarboxylic acids such as acetic acid and citric acid; inorganic acids such as phosphoric acid and sulfuric acid; sugars such as a glucoside; sugar fatty acids such as a glycerol sugar fatty acid and a sphingo sugar fatty acid; fatty acids such as a glycerofatty acid; glycerophosphoric acid; or the like.

Examples of fatty acid derivatives include phospholipid-type, alcohol-type, ether-type, cane sugar ester-type, and polyglycerol ester-type derivatives of the above fatty acids.

Examples of the xanthophyll diesters include xanthophyll diesters produced using identical or different fatty acids selected from the group consisting of the above lower saturated fatty acids, higher saturated fatty acids, lower unsaturated fatty acids, higher unsaturated fatty acids, amino acids, monocarboxylic acids, polycarboxylic acids, inorganic acids, sugar, sugar fatty acids, fatty acids, and glycerophosphoric acid.

The xanthophyll diesters may include salts of these diesters.

Examples of the diesters of glycerophosphoric acid include saturated fatty acid esters of glycerophosphoric acid, glycerophosphoric acid esters containing a fatty acid selected from higher unsaturated fatty acids, unsaturated fatty acids, and saturated fatty acids, and the like.

The following description is given taking astaxanthin as a specific example of the xanthophyll. Note that the following description may also be applied to other xanthophylls.

The term "astaxanthin" refers to astaxanthin that is extracted from a natural product, or astaxanthin that is obtained by synthesis.

Examples of natural astaxanthin include astaxanthin extracted from microalgae such as green algae (*Haematococcus*), yeasts such as red yeast (Phaffia), shells of arthropods (e.g., prawn, krill, crab, and water flea), internal organs and gonads of mollusks (e.g., squid and octopus), skins of fish and shellfish, petals of the genus *Amur amurensis* (e.g., *Adonis aestivalis*), α-proteobacteria (e.g., *Paracoccus sp.* N81106, *Brevundimonas sp.* SD212, and *Erythrobacter sp.* PC6), the genus *Gordonia* (e.g., *Gordonia sp.* KANMONKAZ-1129), *Labyrinthulea* (e.g., *Schizochytriuym sp.* KH105) (particularly *Thraustochytrium*), and astaxanthin-producing recombinants.

An extract and a synthetic product of astaxanthin are easily commercially available.

Astaxanthin (3,3'-dihydroxy-β,β-carotene-4,4'-dione) has a stereoisomer.

Specifically, three astaxanthin stereoisomers ((3R,3'R)-astaxanthin, (3R,3'S)-astaxanthin, and (3S,3'S)-astaxanthin) are known. Any of these stereoisomers may be used in the invention.

Monoesters and diesters of these astaxanthin isomers may be used in the invention.

The fatty acid esters of astaxanthin may be extracted from a natural product, or may be synthesized. It is preferable to use a natural product in which an astaxanthin ester is dissolved in various oils and fats from the viewpoint of absorption in the body.

Examples of natural astaxanthin include a krill extract, a Phaffia yeast extract, and a *Haematococcus* algae extract. It is particularly preferable to use a *Haematococcus* algae extract from the viewpoint of the stability of astaxanthin and the type of astaxanthin ester.

A fatty acid ester of astaxanthin is a safe compound due to the absence of mutagenicity, and has been widely used as a food additive (Takahashi Jiro et al; Toxicity test on Haematococcus algae astaxanthin - Rat 90-day oral administration toxicity test, Rinsho Iyaku, 20: 867-881, 2004).

Discoloration of a carotenoid pigment contained in a carotenoid pigment-containing composition can be suppressed by shading the composition using the container according to the invention.

The carotenoid pigment-containing composition may be a liquid, a solid, a gas, or a mixture thereof.

When the carotenoid pigment-containing composition is a liquid, the carotenoid pigment-containing composition may be a carotenoid pigment-containing emulsion.

When the carotenoid pigment-containing composition is a gas, the carotenoid pigment-containing composition may be a carotenoid pigment-containing aerosol.

When the carotenoid pigment-containing composition is a solid, the carotenoid pigment-containing composition may be a carotenoid pigment-containing microcapsule, hard capsule, or soft capsule.

When using an emulsion droplet or a microcapsule having a size of 1000 µm or less, the outer layer or the water layer in the outer layer is provided with the shading effect according to the invention.

The discoloration prevention method according to the invention may be used for a carotenoid pigment and a carotenoid pigment-containing composition. Examples of the carotenoid pigment-containing composition include a drug, cosmetics, food, drink, and the like.

When using the composition according to the invention as a drug, the composition according to the invention may be parenterally or orally administered.

When orally administering the composition according to the invention, the composition according to the invention is administered in the form of a solid preparation (e.g., tablet, in-mouth rapidly-disintegrable tablet, capsule, granules, or minute granules) or a liquid preparation (e.g., syrup or suspension).

When parenterally administering the composition according to the invention, the composition according to the invention is administered in the form of a nasal drop, patch, ointment, or suppository.

Note that the term "drug" used herein includes a quasi drug.

When using the discoloration prevention method according to the invention for a drug, the drug may contain an appropriate amount of additives generally used when producing a preparation.

Examples of the additives include an excipient, binder, sour agent, foaming agent, artificial sweetener, essence, glidant, coloring agent, stabilizer, pH adjusting agent, surfactant, and the like.

Examples of the excipient include starch (e.g., corn starch, potato starch, wheat starch, rice starch, partially gelatinized starch, gelatinized starch, and porous starch), sugars (e.g., lactose, cane sugar, and glucose), sugar alcohols (e.g., mannitol, xylytol, erythritol, sorbitol, and maltitol), inorganic compounds (e.g., magnesium aluminometasilicate, hydrotalcite, anhydrous calcium phosphate, precipitated calcium carbonate, calcium silicate, and light anhydrous silicic acid), and the like.

Examples of the binder include hydroxypropyl cellulose, hydroxypropyl methyl cellulose, polyvinylpyrrolidone, powdered acacia, gelatin, pullulan, and the like.

Examples of the disintegrator include starch, agar, carmellose calcium, sodium carboxymethyl starch, croscarmellose sodium, crospovidone, crystalline cellulose, F-MELT (manufactured by Fuji Chemical Industry Co., Ltd.), and the like.

Examples of the sour agent include citric acid, tartaric acid, malic acid, ascorbic acid, and the like.

Examples of the foaming agent include sodium hydrogencarbonate, sodium carbonate, and the like.

Examples of the sweetener include saccharin sodium, glycyrrhizin dipotassium salt, aspartame, stevia, thaumatin, and the like.

Examples of the essence include lemon oil, orange oil, menthol, and the like.

Examples of the glidant include magnesium stearate, sucrose fatty acid ester, polyethylene glycol, talc, stearic acid, sodium stearyl fumarate, and the like.

Examples of the coloring agent include food pigments (e.g., Food Yellow No. 5, Food Red No. 2, and Food Blue No. 2), food lake pigment, iron oxide, and the like.

Examples of the stabilizer include sodium edetate, tocopherol, cyclodextrin, and the like.

Examples of the pH adjusting agent include a citrate, phosphate, carbonate, tartrate, fumarate, acetate, amino acid salts, and the like.

Examples of the surfactant include polysorbate 80, methyl cellulose, hydroxyethyl cellulose, sodium carboxymethyl cellulose, polyoxyethylene sorbitan monolaurate, gum arabic, powdered traganth, and the like.

In order to improve the absorption and formulation of astaxanthin or tocotrienol, astaxanthin or tocotrienol may be powdered.

A liquid preparation (e.g., syrup, drinkable preparation, or suspension) may be produced by a normal method using the active ingredient optionally together with the pH adjusting agent, buffer, dissolution agent, suspension, inflating agent, stabilizer, preservative, and the like.

Examples of the suspension include polysorbate 80, methyl cellulose, hydroxyethyl cellulose, sodium carboxymethyl cellulose, polyoxyethylene sorbitan monolaurate, gum arabic, powdered traganth, and the like.

Examples of the dissolution agent include polysorbate 80, polyoxyethylene hydrogenated castor oil, nicotinamide, polyoxyethylene sorbitan monolaurate, macrogol, castor oil fatty acid ethyl ester, and the like.

Examples of the stabilizer include sodium sulfite, sodium metabisulfite, and the like.

Examples of the preservative include methyl p-hydroxybenzoate, ethylparaben, sorbic acid, phenol, cresol, chlorocresol, and the like.

An external skin preparation may be a medical external skin preparation or cosmetic. Examples of the external skin preparation include cosmetics such as milky lotion, cream, toilet lotion, pack, liquid dispersion, cleansing preparation, make-up cosmetic preparation, and scalp/hair articles, and drugs such as an ointment, cream, and external liquid preparation.

A component generally used for cosmetics and medical external skin preparations (e.g., whitening agent, moisturizer, skin nutritional ingredient, UV absorber, antioxidant, oily component, surfactant, thickener, alcohol, coloring material, water, preservative, and essence) may be appropriately used.

When using the discoloration prevention method according to the invention for food, the discoloration prevention method may be used for a supplement, health food, food with nutrient function claims, health function food (e.g., specified health food), special food, common food, quasi drug, and sports supplement. Among these, supplement, sports supplement, health function food, and special food are preferable since such food is easy to consume, and it is easy to determine the amount of consumption. Such food may be in the form of a solid food (e.g., tablet, in-mouth rapidly-disintegrable tablet, capsule, granules, or minute granules), or a liquid food (e.g., drink, syrup, or suspension).

Such food may contain a component that can be used for food and is selected from the above components used for a drug preparation. Such food may also contain a milk protein, soybean protein, egg albumin protein, or a mixture of egg white oligopeptide, a soybean hydrolyzate, and an amino acid.

When providing the food in the form of a drink, nutritious additives (e.g., amino acids, vitamins, and minerals), sweeteners, spices, essences, pigments, and the like may be added to improve the nutritional balance and the flavor.

Note that the food and drink according to the invention are not limited to the above examples.

Examples of common food include margarine, butter, butter sauce, cheese, whipped cream, shortening, lard, ice cream, yogurt, dairy products, meat products, fish products, pickles, French fries, potato chips, snacks, rice snacks, popcorn, seasoned powder, gum, chocolate, pudding, jelly, gummy candy, candy, drops, caramel, bread, sponge cake, cake, doughnuts, biscuits, cookies, crackers, macaroni, pasta, Chinese noodles, buckwheat noodles, wheat noodles, salad oil, instant soup, dressing, egg, mayonnaise, miso, and the like.

When using the discoloration prevention method according to the invention for a drink, the discoloration prevention method may be used for a commercially available drink.

Examples of such drinks include carbonated drinks or non-carbonated drinks (e.g., fruit juice drinks, soft drinks, and sports drinks), non-alcohol drinks (e.g., tea, coffee, and cocoa), alcoholic drinks (e.g., liqueur and medicinal liquor), and the like.

When producing a drink or an external skin preparation, it is preferable to produce a pigment-containing emulsion. For example, a liquid pigment preparation (AstaREAL aqueous solution) produced by the method disclosed in Japanese Patent Application No. 2000-133985 (applied for by the applicant) may be used.

The invention is further described below by way of examples. Note that the invention is not limited to the following examples.

### Measurement of spectral transmittance of wavelength control filter

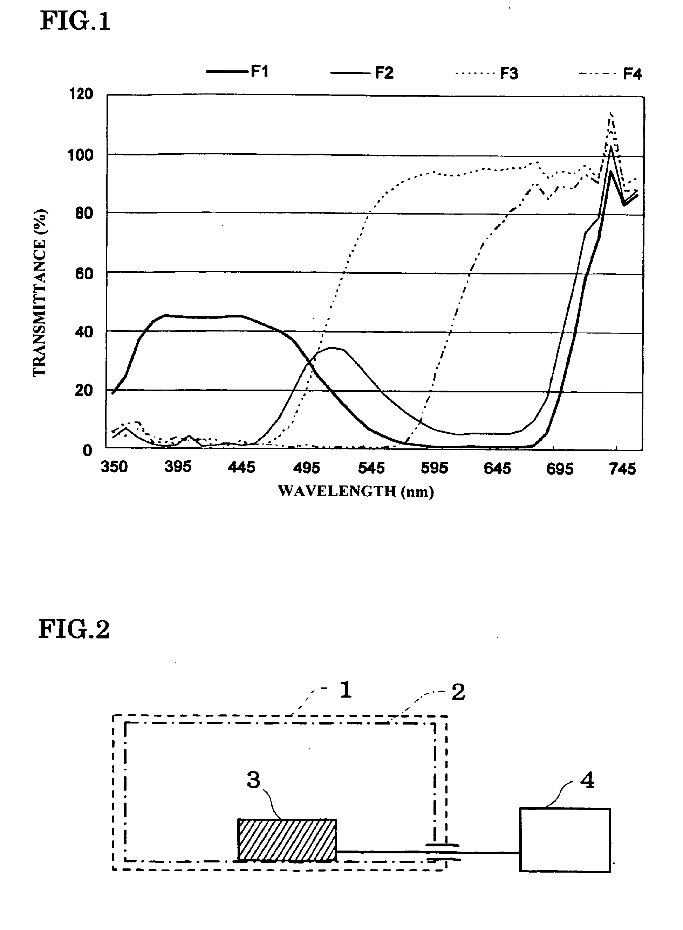

FIG. 1 shows a spectral transmittance curve of each filter.

The transmittance is indicated by the spectral ratio (%) of each control filter with respect to a non-control filter.

The spectrum was measured by the configuration shown in FIG. 2 using the following equipment.

In FIG. 2, reference numeral 1 indicates the case of using the control filter, reference numeral 2 indicates the case of using the non-control filter, reference numeral 3 indicates a light-receiving section, and reference numeral 4 indicates a detection section.

### <Equipment>

1) Light source: air-cooled xenon lamp
   Instrument: SOLARBOX 1500e manufactured by COFOMEGRA (measured at 550 W/m²)
2) Wavelength meter: radiometer ("Solar Tester SCR-200" manufactured by Bunkoh-Keiki Co., Ltd.)
3) Non-control filter: crystal box ("V·W-1" manufactured by HEIKO)
4) Control filter: color cellophane (manufactured by Toyo Corporation) F1: blue cellophane, F2: green cellophane, F3: yellow cellophane, F4: red cellophane Sample preparation

A mixture of components 1 to 5 and a mixture of components 6 and 7 shown in Table 1 were homogenously mixed to obtain a test sample (hereinafter abbreviated as "T") and a comparative sample (prior art) (hereinafter abbreviated as "C").

"AstaREAL oil 50F" (*Haematococcus* algae pigment) (manufactured by Fuji Chemical Industry Co., Ltd.) was used as the astaxanthin ester, natural vitamin E (manufactured by Tama Kagaku Kogyo Co., Ltd.) was used as the mix tocopherol, and "NIKKOL HCO60" (manufactured by Nikko Chemicals Co., Ltd.) was used as the polyoxyethylene hydrogenated castor oil (60 E.O.).

**TABLE 1**

| Component (wt%) | | T | C |
|---|---|---|---|
| 1 | Astaxanthin ester | 0.03 | 0.03 |
| 2 | Mix tocopherol | - | 0.01 |
| 3 | Polyoxyethylene hydrogenated castor oil (60 E.O.) | 0.75 | 0.75 |
| 4 | Ethanol | 5.00 | 5.00 |
| 5 | Preservative | Proper quantity | Proper quantity |
| 6 | pH adjuting agent | Proper quantity | Proper quantity |
| 7 | Purified water | Balance | Balance |

### Experiment 1

A stability test was performed using the control filter or the non-control filter shown in FIG. 1 and each sample. The results are shown in Table 2.

In the stability test, the sample was placed in a transparent colorless glass bottle (No. 4K, transparent). The entire glass bottle was covered with the filter, and exposed to sunlight for 18 hours to measure the astaxanthin ester residual rate.

The residual rate is indicated by the ratio (index) of the ratio of the absorbance at 480 nm of the filter-covered test sample (T) exposed to sunlight for 18 hours to the absorbance at 480 nm of the test sample (T) immediately after production, with respect to that of the comparative sample (C).

**TABLE 2**

| Astaxanthin ester residual index when covering container with control filter | | | | |
|---|---|---|---|---|
| | Filter | Sample | Average spectral transmittance (%) | Residual index |
| Example 1 | F1 | T | 2.82 | 157.3 |
| Example 2 | F2 | T | 11.76 | 171.0 |
| Comparative Example 1 | Non-control filter | C | 100 | 100.0 |
| Comparative Example 2 | Non-control filter | T | 100 | 40.5 |
| Comparative Example 3 | F3 | T | 91.36 | 68.5 |
| Comparative Example 4 | F4 | T | 44.39 | 91.5 |

### Measurement of average ultraviolet light transmittance and average visible light transmittance of each control filter

Table 3 shows the average ultraviolet light transmittance and the average visible light transmittance of each filter when exposed to sunlight.

The average ultraviolet light transmittance and the average visible light transmittance of each filter are indicated by the ratio (%) of the amount of ultraviolet light and the amount of visible light that passed through each filter with respect to those of the non-control filter.

The transmittance was measured by the configuration shown in FIG. 2 using the following equipment.

### <Equipment>

1) Ultraviolet light measurement: digital UV meter "UV-340" manufactured by Mother Tool Co., Ltd.
2) Visible light measurement: digital illuminance meter "T- 10M" manufactured by Konica Minolta Sensing, Inc.
3) Non-control filter: crystal box ("V·W-1" manufactured by HEIKO)
4) Control filter: sun-cut magic film (F1, F2, and F5) or UV-cut film (F6) (manufactured by Ohashi Sangyo Co., Ltd.)

**TABLE 3**

| | Filter | Average ultraviolet light transmittance (%) | Average visible light transmittance (%) |
|---|---|---|---|
| Example 1 | F1 | 33.3 | 6.9 |
| Example 2 | F2 | 21.0 | 14.3 |
| Comparative Example 4 | F5 | 29.4 | 87.8 |
| Comparative Example 5 | F6 | 24.7 | 4.4 |

### Experiment 2

The stability test was performed using the control filter shown in Table 3 or the non-control filter and each sample.

The test results are shown in Table 4.

**TABLE 4**

| Astaxanthin ester residual index when covering container with control filter | | | |
|---|---|---|---|
| | Filter | Sample | Residual index |
| Example 1 | F1 | T | 181.2 |
| Example 2 | F2 | T | 187.7 |
| Comparative Example 1 | Non-control filter | C | 100.0 |
| Comparative Example 2 | Non-control filter | T | 27.7 |
| Comparative Example 4 | F5 | T | 72.5 |
| Comparative Example 5 | F6 | T | 213.2 |

As shown in Table 2, when the residual index of Comparative Example 1 (prior art) is 100.0, the residual index of Comparative Example 2 using the test sample (T) was 40.5, and the residual indices of Examples 1 and 2 were 157.3 to 171.0.

The residual indices of Comparative Examples 3 and 4 were lower than that of Comparative Example 1 (prior art).

A high discoloration suppression effect was achieved in Example 1 (F1) although the transmittance of light at about 480 nm (i.e., the maximum absorption wavelength region of astaxanthin) was high (see FIG. 1). On the other hand, the discoloration suppression effect was low in Comparative Examples 3 and 4 (F3 and F4) in which the transmittance of light at about 480 nm was low. Therefore, it was surprisingly confirmed that a high discoloration suppression effect can be achieved by controlling the average spectral transmittance of light at 535 to 695 nm.

As shown in Tables 3 and 4, when the residual index of Comparative Example 1 (prior art) is 100.0, the residual index of Comparative Example 2 using the test sample (T) was 27.7, while a high discoloration suppression effect was achieved in Comparative Example 5 in which the average visible light transmittance was controlled. On the other hand, a discoloration suppression effect was not obtained in Comparative Example 4 in which only the average ultraviolet light transmittance was controlled.

This suggests that visible light is involved in suppression of discoloration of the astaxanthin ester as compared with ultraviolet light.

In Examples 1 and 2, a high discoloration suppression effect was achieved by controlling the average spectral transmittance of light at 535 to 695 nm to 2.82% or 11.76% (i.e., 45.0% or less).

The discoloration suppression effect achieved by controlling the average spectral transmittance of light at 535 to 695 nm was 71.7 to 77.5% of the discoloration suppression effect achieved by controlling the transmittance of light over the entire visible region. This suggests that the astaxanthin ester is mainly stabilized by controlling the average spectral transmittance of light at 535 to 695 nm within the visible region.

It was confirmed by the above results that light stability can be significantly improved by controlling the average spectral transmittance of light at 535 to 695 nm as compared with the case of controlling the transmittance of light in the ultraviolet region or at 480 nm (maximum absorption wavelength region) that has been considered to affect the light stability of astaxanthin.

As shown in Table 2, the residual index when using the control filter F4 was higher than the residual index when using the control filter F3. The difference in residual index was 23.0 (=91.5-68.5).

As shown in FIG. 1, the control filters F3 and F4 do not differ in transmittance at a wavelength of higher than 600 nm. Therefore, it is considered that the discoloration suppression effect is particularly affected by the wavelength region of 535 to 600 nm within the wavelength region of 535 to 695 nm.

### INDUSTRIAL APPLICABILITY

According to the invention, since discoloration of a carotenoid pigment due to light can be effectively suppressed, the invention may be utilized in various industrial fields that involve storage of food, drink, functional food, an external preparation, cosmetics, a quasi drug, a drug, and the like containing a carotenoid pigment.

## Claims

1. A method of suppressing discoloration of a carotenoid pigment comprising storing a carotenoid pigment in a container that has an average spectral transmittance of 0.01 to 45.0% only at a wavelength of 535 to 695 nm within the visible region, the container allowing the amount of product stored therein to be determined from the outside of the container.

2. The method as defined in claim 1
comprising storing the carotenoid pigment in the container that has an average spectral transmittance of 0.01 to 35.0% only at a wavelength of 535 to 695 nm within the visible region, the container allowing the amount of product stored therein to be determined from the outside of the container.

3. The method as defined in claim 1
comprising storing the carotenoid pigment in the container that has an average spectral transmittance of 0.01 to 25.0% only at a wavelength of 535 to 695 nm within the visible region, the container allowing the amount of product stored therein to be determined from the outside of the container.

4. The method as defined in claim 1
comprising storing the carotenoid pigment in the container that has an average spectral transmittance of 0.01 to 15.0% only at a wavelength of 535 to 695 nm within the visible region, the container allowing the amount of product stored therein to be determined from the outside of the container.

5. The method as defined in any one of claims 1 to 4,
the carotenoid pigment being a xanthophyll.

6. The method as defined in any one of claims 1 to 4,
the carotenoid pigment being astaxanthin.

7. The method as defined in any one of claims 1 to 4,
the carotenoid pigment being a *Haematococcus* pigment.

8. A container that is used for the method as defined in claim 1,
the container storing a carotenoid pigment and having an average spectral transmittance of 0.01 to 45.0% only at a wavelength of 535 to 695 nm within the visible region, the container allowing the amount of product stored therein to be determined from the outside of the container.

9. Use of the container as defined in claim 8 for storing food, drink, functional food, an external preparation, cosmetics, a quasi drug, or a drug.

## Patentansprüche

1. Verfahren zum Unterdrücken der Entfärbung eines Carotinoidpigmentes mit Speichern eines Carotinoidpigmentes in einem Behälter, der eine mittlere spektrale Lichtdurchlässigkeit von 0,01 bis 45,0% nur bei einer Wellenlänge von 535 bis 695 nm innerhalb des sichtbaren Bereiches aufweist, wobei es der Behälter ermöglicht, dass die Menge des darin gespeicherten Produktes von außerhalb des Behälters bestimmt wird.

2. Verfahren nach Anspruch 1,
mit Speichern des Carotinoidpigmentes in dem Behälter, der eine mittlere spektrale Lichtdurchlässigkeit von 0,01 bis 35,0% nur bei einer Wellenlänge von 535 bis 695 nm innerhalb des sichtbaren Bereiches aufweist, wobei es der Behälter ermöglicht, dass die Menge des darin gespeicherten Produktes von außerhalb des Behälters bestimmt wird.

3. Verfahren nach Anspruch 1,
mit Speichern des Carotinoidpigmentes in dem Behälter, der eine mittlere spektrale Lichtdurchlässigkeit von 0,01 bis 25,0% nur bei einer Wellenlänge von 535 bis 695 nm innerhalb des sichtbaren Bereiches aufweist, wobei es der Behälter ermöglicht, dass die Menge des darin gespeicherten Produktes von außerhalb des Behälters bestimmt wird.

4. Verfahren nach Anspruch 1,
mit Speichern des Carotinoidpigmentes in dem Behälter, der eine mittlere spektrale Lichtdurchlässigkeit von 0,01 bis 15,0% nur bei einer Wellenlänge von 535 bis 695 nm innerhalb des sichtbaren Bereiches aufweist, wobei es der Behälter ermöglicht, dass die Menge des darin gespeicherten Produktes von außerhalb des Behälters bestimmt wird.

5. Verfahren nach einem der Ansprüche 1 bis 4,
wobei das Carotinoidpigment ein Xanthophyll ist.

6. Verfahren nach einem der Ansprüche 1 bis 4,
wobei das Carotinoidpigment ein Astaxanthin ist.

7. Verfahren nach einem der Ansprüche 1 bis 4,
wobei das Carotinoidpigment ein Haematococcus-Pigment ist.

8. Ein Behälter, der für das Verfahren nach Anspruch 1 verwendet wird, wobei der Behälter ein Carotinoidpigment speichert und eine mittlere spektrale Lichtdurchlässigkeit von 0,01 bis 45,0% nur bei einer Wellenlänge von 535 bis 695 nm innerhalb des sichtbaren Bereiches aufweist, wobei es der Behälter ermöglicht, dass die Menge des darin gespeicherten Produktes von außerhalb des Behälters bestimmt wird.

9. Verwendung des Behälters nach Anspruch 8,
zum Speichern von Nahrungsmitteln, Getränken, funktionellen Lebensmitteln, einer äußeren Zubereitung, Kosmetika, einem Quasi-Medikament oder einem Medikament.

## Revendications

1. Procédé pour empêcher la décoloration d'un pigment caroténoïde comprenant le stockage d'un pigment caroténoïde dans un récipient qui possède un facteur spectral de transmission moyen de 0,01 à 45,0 % seulement à une longueur d'onde de 535 à 695 nm dans le domaine du visible, le récipient permettant que la quantité de produit stockée dans celui-ci soit déterminée depuis l'extérieur du récipient.

2. Procédé selon la revendication 1,
comprenant le stockage d'un pigment caroténoïde dans un récipient qui possède un facteur spectral de transmission moyen de 0,01 à 35,0 % seulement à une longueur d'onde de 535 à 695 nm dans le domaine du visible, le récipient permettant que la quantité de produit stockée dans celui-ci soit déterminée depuis l'extérieur du récipient.

3. Procédé selon la revendication 1,
comprenant le stockage d'un pigment caroténoïde dans un récipient qui possède un facteur spectral de transmission moyen de 0,01 à 25,0 % seulement à une longueur d'onde de 535 à 695 nm dans le domaine du visible, le récipient permettant que la quantité de produit stockée dans celui-ci soit déterminée depuis l'extérieur du récipient.

4. Procédé selon la revendication 1,
comprenant le stockage d'un pigment caroténoïde dans un récipient qui possède un facteur spectral de transmission moyen de 0,01 à 15,0 % seulement à une longueur d'onde de 535 à 695 nm dans le domaine du visible, le récipient permettant que la quantité de produit stockée dans celui-ci soit déterminée depuis l'extérieur du récipient.

5. Procédé selon l'une quelconque des revendications 1 à 4,
le pigment caroténoïde étant un xanthophylle.

6. Procédé selon l'une quelconque des revendications 1 à 4,
le pigment caroténoïde étant l'astaxanthine.

7. Procédé selon l'une quelconque des revendications 1 à 4,
le pigment caroténoïde étant un pigment d'Haematococcus.

8. Récipient utilisé dans le procédé selon la revendication 1,
le récipient servant au stockage d'un pigment caroténoïde et ayant un facteur spectral de transmission moyen de 0,01 à 45,0 % seulement à une longueur d'onde de 535 à 695 nm dans le domaine du visible, le récipient permettant que la quantité de produit stockée dans celui-ci soit déterminée depuis l'extérieur du récipient.

9. Utilisation du récipient selon la revendication 8 pour le stockage d'aliments, de boissons, d'aliments fonctionnels, d'une préparation à usage externe, de cosmétiques, d'un produit parapharmaceutique, ou d'un médicament.
